(19) Europäisches Patentamt / European Patent Office / Office européen des brevets

(11) **EP 4 575 593 A1**

(12) **EUROPEAN PATENT APPLICATION**

(43) Date of publication:
**25.06.2025 Bulletin 2025/26**

(21) Application number: **24221038.3**

(22) Date of filing: **18.12.2024**

(51) International Patent Classification (IPC):
**G02B 1/115** (2015.01)   **G02B 1/118** (2015.01)
**G02B 5/02** (2006.01)

(52) Cooperative Patent Classification (CPC):
**G02B 1/118; G02B 1/115; G02B 5/0221**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.12.2023 US 202363613181 P
23.08.2024 TW 113131719**

(71) Applicant: **LARGAN PRECISION CO., LTD.
Taichung City 408 (TW)**

(72) Inventors:
• **TSAI, Wen-Yu
408 Taichung City (TW)**

• **CHANG, Lin-An
408 Taichung City (TW)**
• **CHOU, Ming-Ta
408 Taichung City (TW)**
• **CHANG, Chien-Pang
408 Taichung City (TW)**
• **CHU, Kuo-Chiang
408 Taichung City (TW)**

(74) Representative: **Jakelski & Althoff
Patentanwälte PartG mbB
Patentanwälte
Partnerschaftsgesellschaft
Mollenbachstraße 37
71229 Leonberg (DE)**

(54) **IMAGING LENS ASSEMBLY MODULE, CAMERA MODULE AND ELECTRONIC DEVICE**

(57) An imaging lens assembly module has an optical axis, and includes an optical element, an assembling element and a low-reflection thin film, wherein the optical axis passes through the optical element. The assembling element is configured to be assembled with the optical element. The low-reflection thin film is disposed on a part of surfaces of the assembling element, and includes a nanostructure layer and a nanostructure matching layer. The nanostructure layer includes a plurality of ridged protrusions, wherein the ridged protrusions are arranged irregularly. The nanostructure matching layer is disposed between the assembling element and the nanostructure layer, and includes at least two optically rarer medium layers and at least one optically denser medium layer. The at least one optically denser medium layer is stacked between the at least two optically rarer medium layers.

Fig. 1A

EP 4 575 593 A1

**Description**

**BACKGROUND**

Technical Field

The present disclosure relates to an imaging lens assembly module and a camera module. More particularly, the present disclosure relates to an imaging lens assembly module and a camera module applicable to portable electronic devices.

Description of Related Art

In the recent years, portable electronic devices have developed rapidly. For example, intelligent electronic devices and tablets have been filled in the lives of modern people, and camera modules and imaging lens assembly modules mounted on portable electronic devices have also prospered. However, as technology advances, the quality requirements of the imaging lens assembly modules are becoming higher and higher. Therefore, an imaging lens assembly module, which can improve an environmental tolerance and reduce stray light, needs to be developed.

**SUMMARY**

According to one aspect of the present disclosure, an imaging lens assembly module has an optical axis and includes an optical element, an assembling element and a low-reflection thin film, wherein the optical axis passes through the optical element. The assembling element is configured to be assembled with the optical element. The low-reflection thin film is disposed on a part of surfaces of the assembling element, and includes a nanostructure layer and a nanostructure matching layer. The nanostructure layer includes a plurality of ridged protrusions, wherein the ridged protrusions are arranged irregularly. The nanostructure matching layer is disposed between the assembling element and the nanostructure layer, and includes at least two optically rarer medium layers and at least one optically denser medium layer. The at least one optically denser medium layer is stacked between the at least two optically rarer medium layers, wherein a thickness of each of the at least two optically rarer medium layers is larger than 40 nm and less than 100 nm, a thickness of the at least one optically denser medium layer is larger than 1 nm and less than 33 nm, and a height of each of the ridged protrusions is larger than 80 nm and less than 300 nm.
According to the imaging lens assembly module of the aforementioned aspect, wherein the thickness of each of the at least two optically rarer medium layers is larger than 45 nm and less than 95 nm.
According to the imaging lens assembly module of the aforementioned aspect, wherein the thickness of each of the at least two optically rarer medium layers is larger than 48 nm and less than 85 nm.
According to the imaging lens assembly module of the aforementioned aspect, wherein the thickness of the at least one optically denser medium layer is larger than 3 nm and less than 28 nm.
According to the imaging lens assembly module of the aforementioned aspect, wherein the thickness of the at least one optically denser medium layer is larger than 3 nm and less than 25 nm.
According to the imaging lens assembly module of the aforementioned aspect, wherein the optical element is assembled on the assembling element, and the optical element is directly contacted with the assembling element.
According to the imaging lens assembly module of the aforementioned aspect, wherein the assembling element is made of an opaque plastic material to absorb a light incident into the assembling element.
According to the imaging lens assembly module of the aforementioned aspect, wherein the at least two optically rarer medium layers include a silicon oxide material.
According to the imaging lens assembly module of the aforementioned aspect, wherein the at least one optically denser medium layer includes a titanium oxide material.
According to the imaging lens assembly module of the aforementioned aspect, wherein the ridged protrusions include an aluminum oxide material.
According to the imaging lens assembly module of the aforementioned aspect, the imaging lens assembly module further includes an adhering component that is disposed on the assembling element to assembly the imaging lens assembly module, wherein the adhering component is not directly contacted with the low-reflection thin film.
According to the imaging lens assembly module of the aforementioned aspect, wherein an optical reflectance of the low-reflection thin film in a visible light wavelength range is R, and the following condition is satisfied: $0.0\% \leq R \leq 0.6\%$.
According to the imaging lens assembly module of the aforementioned aspect, wherein the optical reflectance of the low-reflection thin film in the visible light wavelength range is R, and the following condition is satisfied: $0.0\% \leq R \leq 0.4\%$.
According to the imaging lens assembly module of the aforementioned aspect, wherein the optical reflectance of the low-reflection thin film in the visible light wavelength range is R, and the following condition is satisfied: $0.0\% \leq R \leq 0.3\%$.

According to the imaging lens assembly module of the aforementioned aspect, wherein the assembling element is disposed on a surface of the low-reflection thin film, and a value of CIELAB color space as claimed in the surface is L*a*b*, L* is a lightness, a* is a degree of red and green, b* is a degree of yellow and blue, and the following conditions are satisfied: 0.2 < L* < 2.7; -1.5 < a* < 2.0; and -4.0 < b* < 2.5.

According to one aspect of the present disclosure, a camera module includes the imaging lens assembly module of the aforementioned aspect and an image sensor, wherein the image sensor is disposed on an image surface of the imaging lens assembly module.

According to one aspect of the present disclosure, an electronic device includes the camera module of the aforementioned aspect.

## BRIEF DESCRIPTION OF THE DRAWINGS

The present disclosure can be more fully understood by reading the following detailed description of the embodiment, with reference made to the accompanying drawings as follows:

Fig. 1A is a schematic view of a camera module according to the 1st embodiment of the present disclosure.

Fig. 1B is a scanning electron microscope image of area 1B according to the 1st embodiment in Fig. 1A.

Fig. 1C is a schematic view of a low-reflection thin film and an assembling element according to the 1st embodiment in Fig. 1A.

Fig. 2 is a schematic view of a camera module according to the 2nd embodiment of the present disclosure.

Fig. 3 is a schematic view of a camera module according to the 3rd embodiment of the present disclosure.

Fig. 4 is a schematic view of a camera module according to the 4th embodiment of the present disclosure.

Fig. 5 is a schematic view of a camera module according to the 5th embodiment of the present disclosure.

Fig. 6A is a schematic view of an electronic device according to the 6th embodiment of the present disclosure.

Fig. 6B is another schematic view of the electronic device according to the 6th embodiment in Fig. 6A.

Fig. 6C is a schematic view of an image captured via the electronic device according to the 6th embodiment in Fig. 6A.

Fig. 6D is a schematic view of another image captured via the electronic device according to the 6th embodiment in Fig. 6A.

Fig. 6E is a schematic view of another image captured via the electronic device according to the 6th embodiment in Fig. 6A.

Fig. 7 is a schematic view of an electronic device according to the 7th embodiment of the present disclosure.

Fig. 8A is a schematic view of a camera module applied to a vehicle according to the 8th embodiment of the present disclosure.

Fig. 8B is a schematic view of a camera module configured on the vehicle according to the 8th embodiment in Fig. 8A.

Fig. 8C is another schematic view of a camera module configured on the vehicle according to the 8th embodiment in Fig. 8A.

## DETAILED DESCRIPTION

The present disclosure provides an imaging lens assembly module having an optical axis, and the imaging lens assembly module includes an optical element, an assembling element and a low-reflection thin film, wherein the optical axis passes through the optical element, and the assembling element is configured to be assembled with the optical element. The low-reflection thin film is disposed on a part of surfaces of the assembling element, and includes a nanostructure layer and a nanostructure matching layer. The nanostructure layer includes a plurality of ridged protrusions, wherein the ridged protrusions are arranged irregularly. The nanostructure matching layer is disposed between the assembling element and the nanostructure layer, and includes at least two optically rarer medium layers and at least one optically denser medium layer. The at least one optically denser medium layer is stacked between the at least two optically rarer medium layers, wherein a thickness of each of the at least two optically rarer medium layers is larger than 40 nm and less than 100 nm, a thickness of the at least one optically denser medium layer is larger than 1 nm and less than 33 nm, and a height of each of the ridged protrusions is larger than 80 nm and less than 300 nm. Therefore, it is favorable for improving a matching level of refractive indices between the assembling element and the nanostructure layer by the nanostructure matching layer, so that light can easily enter the assembling element from the outmost side of the nanostructure layer so as to keep a low reflectance. Moreover, stray light can be reduced by the nanostructure layer with the ridged protrusions arranged irregularly. In detail, the present disclosure provides the low-reflection thin film with a high environmental tolerance by stacking the optically rarer medium layers, the optically denser medium layer and the nanostructure layer.

Specifically, a surface appearance of the assembling element coated with the low-reflection thin film is not easily damaged by external environmental factors. Furthermore, the optically rarer medium layers and the optically denser medium layer of the nanostructure matching layer can be formed by stacking combinations of $SiO_2$, $MgF_2$, $TiO_2$, $Ta_2O_5$, $Cr_2O_3$, $HfO_2$, $ZnO$, $AlN$, $Al_2O_3$, $Y_2O_3$, $CaF_2$, $SiC$, $MgO$ and $ZrO_2$, so that a tolerance to volatile substances of the low-reflection thin film can be improved and production processes can be optimized. The element proportions of the compounds above are not limited to the present disclosure, and can be different with different production processes. Moreover, the ridged protrusions are with non-uniform heights, and heights of the ridged protrusions can be different.

Further, the optical element can be an optical lens element or an optical prism element, but the present disclosure is not limited thereto. The assembling element can be a lens barrel, a lens carrier, a retaining element or a prism carrier, but the present disclosure is not limited thereto.

The thickness of each of the at least two optically rarer medium layers can be larger than 45 nm and less than 95 nm. Therefore, it is favorable for improving the anti-reflecting efficacy of the low-reflection thin film by stacking the optically rarer medium layers and the optically denser medium layer with a certain thickness. Moreover, the thickness of each of the at least two optically rarer medium layers can be larger than 48 nm and less than 85 nm.

The thickness of the at least one optically denser medium layer can be larger than 3 nm and less than 28 nm. Therefore, it is favorable for improving the anti-reflecting efficacy of the low-reflection thin film by stacking the optically rarer medium layers and the optically denser medium layer with a certain thickness. Moreover, the thickness of the optically denser medium layer can be larger than 3 nm and less than 25 nm.

The optical element can be assembled on the assembling element, and the optical element can be directly contacted with the assembling element. Therefore, it is favorable for reducing a generation probability of the non-imaging light between the optical element and the assembling element.

The assembling element can be made of an opaque plastic material to absorb the light incident into the assembling element. Therefore, it is favorable for improving the imaging quality of the imaging lens assembly module.

The at least two optically rarer medium layers can include a silicon oxide material, and the silicon oxide material can be $Si_xO_y$, wherein proportions of silicon and oxygen are respectively x and y, the proportions can be different with different production processes. Therefore, a more stable process can be provided so as to ensure the mass production capability.

The at least one optically denser medium layer can include a titanium oxide material, and the titanium oxide material can be $Ti_xO_y$, wherein proportions of titanium and oxygen are respectively x and y, the proportions can be different with different production processes. Therefore, an optical film material with a higher reflectance can be provided so as to reduce the complexity of a film layer design.

The ridged protrusions can include an aluminum oxide material, the aluminum oxide material can be $Al_xO_y$, wherein proportions of aluminum and oxygen are respectively x and y, the proportions can be different with different production processes. Therefore, it is favorable for providing the durability and the structural stability of the low-reflection thin film so as to improve a product yield rate.

The imaging lens assembly module can further include an adhering component, wherein the adhering component can be disposed on the assembling element to assembly the imaging lens assembly module, and the adhering component can be not directly contacted with the low-reflection thin film. Therefore, it is favorable for improving the assembling efficiency of the imaging lens assembly module so as to provide the assembling stability.

When an optical reflectance of the low-reflection thin film in a visible light wavelength range is R, the following condition can be satisfied: $0.0\% \leq R \leq 0.6\%$. Therefore, it is favorable for providing the low-reflection thin film with a high production yield rate. Moreover, the following condition can be satisfied: $0.0\% \leq R \leq 0.4\%$. Therefore, it is favorable for further increasing the efficiency of the assembling element in absorbing stray light. Furthermore, the following condition can be satisfied: $0.0\% \leq R \leq 0.3\%$. Therefore, it is favorable for providing a high environmental tolerance of the low-reflection thin film and reducing the generation of stray light.

The assembling element is disposed on a surface of the low-reflection thin film, wherein a value of CIELAB color space of the surface is L*a*b*, L* is a lightness, a* is a degree of red and green, b* is a degree of yellow and blue, and the following conditions can be satisfied: $0.2 < L^* < 2.7$; $-1.5 < a^* < 2.0$; and $-4.0 < b^* < 2.5$. Therefore, it is favorable for providing the stability in optical properties of the surface of the assembling element.

Each of the aforementioned features of the imaging lens assembly module can be utilized in various combinations for achieving the corresponding effects.

The present disclosure provides a camera module that includes the imaging lens assembly module of the aforementioned aspect and an image sensor, wherein the image sensor is disposed on an image surface of the imaging lens assembly module.

The present disclosure provides an electronic device that includes the aforementioned camera module.

According to the aforementioned descriptions, specific embodiments and specific examples are provided, and illustrated via figures.

<1st embodiment>

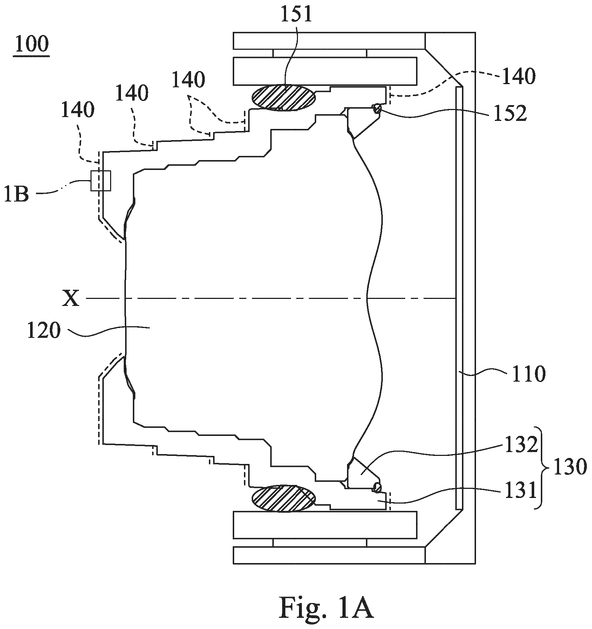

Fig. 1A is a schematic view of a camera module 100 according to the 1st embodiment of the present disclosure. In Fig. 1A, the camera module 100 includes an imaging lens assembly module (not shown) and an image sensor 110, wherein the image sensor 110 is disposed on an image surface (not shown) of the imaging lens assembly module. The imaging lens assembly module has an optical axis X, and the imaging lens assembly module includes an optical element 120, an assembling element 130 and a plurality of low-reflection thin films 140, wherein the optical axis X passes through the optical element 120, and the assembling element 130 is configured to be assembled with the optical element 120. In detail, the optical element 120 can be assembled on the assembling element 130, and the optical element 120 can be directly contacted with the assembling element 130. Moreover, the assembling element 130 can be made of an opaque plastic material to absorb light incident into the assembling element 130.

Furthermore, the assembling element 130 can include a first assembling component 131 and a second assembling component 132, wherein the first assembling component 131 surrounds and positions the optical element 120, the second assembling component 132 can be a retainer, and located on an image side of the optical element 120. The imaging lens assembly module can further include two adhering components 151, 152, wherein the adhering component 151 can be disposed on the first assembling component 131 of the assembling element 130 to assembly the imaging lens assembly module, and the adhering component 151 can be not directly contacted with the low-reflection thin films 140. The adhering component 152 is configured to position the second assembling component 132 in the first assembling component 131 and on the image side of the optical element 120.

Specifically, the optical element 120 can be an optical lens element or an optical prism element, but the present disclosure is not limited thereto. The assembling element 130 can be a lens barrel, a lens carrier, a retaining element or a prism carrier, but the present disclosure is not limited thereto.

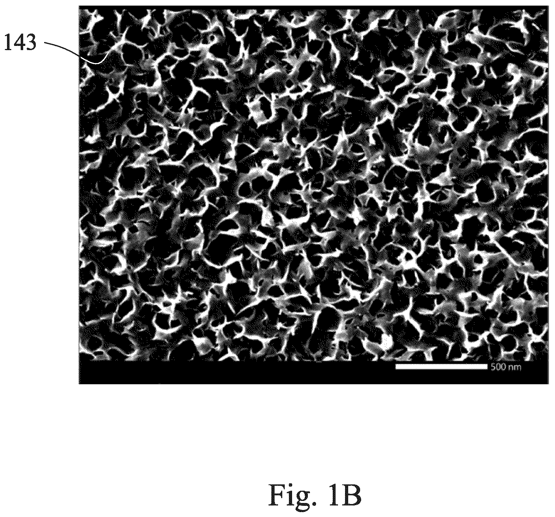

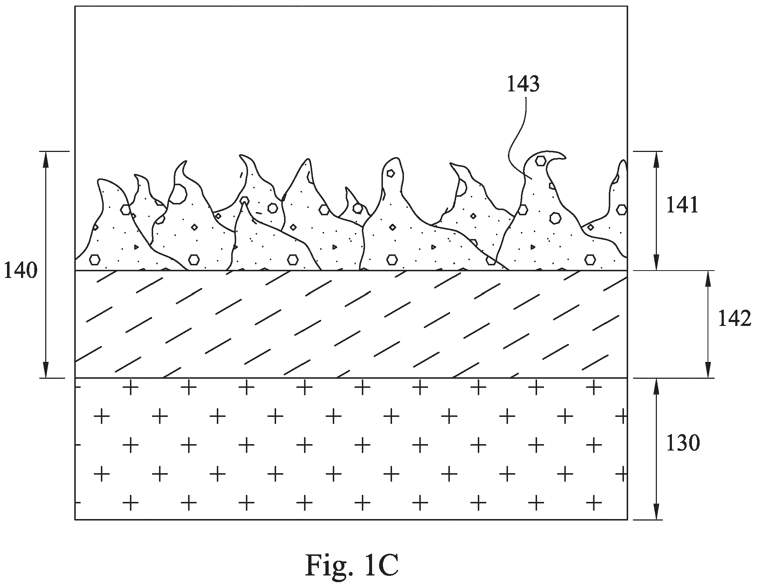

Fig. 1B is a scanning electron microscope image of area 1B according to the 1st embodiment in Fig. 1A, and Fig. 1C is a schematic view of a low-reflection thin film 140 and an assembling element 130 according to the 1st embodiment in Fig. 1A. In Fig. 1A to Fig. 1C, the low-reflection thin films 140 are disposed on a part of surfaces of the assembling element 130, which are surfaces of the first assembling component 131 facing towards an object side and a surface of the first assembling component 131 facing towards an image side. Each of the low-reflection thin films 140 includes a nanostructure layer 141 and a nanostructure matching layer 142. The nanostructure layer 141 includes a plurality of ridged protrusions 143, wherein the ridged protrusions 143 are arranged irregularly. Moreover, the nanostructure matching layer 142 is disposed between the assembling element 130 and the nanostructure layer 141, and includes at least two optically rarer medium layers and at least one optically denser medium layer. Furthermore, the at least one optically denser medium layer is stacked between the at least two optically rarer medium layers. A thickness of each of the at least two optically rarer medium layers is larger than 40 nm and less than 100 nm, a thickness of the at least one optically denser medium layer is larger than 1 nm and less than 33 nm, and a height of each of the ridged protrusions 143 is larger than 80 nm and less than 300 nm.

In detail, the thickness of each of the at least two optically rarer medium layers can be larger than 45 nm and less than 95 nm. Moreover, the thickness of each of the at least two optically rarer medium layers can be larger than 48 nm and less than 85 nm. The thickness of the at least one optically denser medium layer can be larger than 3 nm and less than 28 nm. Moreover, the thickness of the at least one optically denser medium layer can be larger than 3 nm and less than 25 nm. Furthermore, the at least two optically rarer medium layers can include a silicon oxide material, the at least one optically denser medium layer can include a titanium oxide material, and the ridged protrusions 143 can include an aluminum oxide material. Specifically, the mentioned parameters satisfy the following conditions in Table 1, and Table 1 shows the material and the thickness of the nanostructure matching layer 142 of the Example 1 in the 1st embodiment. Values in Table 1 are the thickness of each of the at least two optically rarer medium layers and the thickness of the at least one optically denser medium layer, respectively.

| Table 1, Example 1 in 1st embodiment | | |
|---|---|---|
| | Material | Thickness |
| Optically rarer medium layer | $SiO_2$ | 18 nm |
| Optically denser medium layer | $TiO_2$ | 6 nm |
| Optically rarer medium layer | $SiO_2$ | 58 nm |
| Optically denser medium layer | $TiO_2$ | 13 nm |
| Optically rarer medium layer | $SiO_2$ | 54 nm |
| Optically denser medium layer | $TiO_2$ | 7 nm |
| Optically rarer medium layer | $SiO_2$ | 8 nm |

In detail, when an optical reflectance of the low-reflection thin films 140 in a visible light wavelength range is R, the following condition can be satisfied: $0.0\% \leq R \leq 0.6\%$. Moreover, the following condition can be satisfied: $0.0\% \leq R \leq 0.4\%$. Furthermore, the following condition can be satisfied: $0.0\% \leq R \leq 0.3\%$.

The assembling element 130 is disposed on a surface of the low-reflection thin films 140, wherein a value of CIELAB color space of the surface is L*a*b*, L* is a lightness, a* is a degree of red and green, b* is a degree of yellow and blue, and the following conditions can be satisfied: $0.2 < L^* < 2.7$; $-1.5 < a^* < 2.0$; and $-4.0 < b^* < 2.5$. The mentioned parameters satisfy the following conditions in Table 2, and Table 2 shows values of CIELAB color space of the Example 1 in the 1st embodiment.

| Table 2, Example 1 in 1st embodiment | | |
|---|---|---|
| | Before heating | After heating |
| L* | 0.90 | 1.26 |
| a* | -0.29 | 0.21 |
| b* | -1.83 | -0.41 |

Table 3 shows the thickness of each layer in the nanostructure matching layer 142 of the Example 2 in the 1st embodiment. Specifically, the material of each layer in the nanostructure matching layer 142 of the Example 2 in the 1st embodiment and of the Example 1 in the 1st embodiment are the same or similar, the differences are the thickness of each of the at least two optically rarer medium layers and the thickness of the at least one optically denser medium layer.

| Table 3, Example 2 in 1st embodiment | |
|---|---|
| | Thickness |
| Optically rarer medium layer | 10 nm |
| Optically denser medium layer | 8 nm |
| Optically rarer medium layer | 46 nm |
| Optically denser medium layer | 15 nm |
| Optically rarer medium layer | 62 nm |
| Optically denser medium layer | 8 nm |
| Optically rarer medium layer | 11 nm |

Furthermore, Table 4 shows values of CIELAB color space of the Example 2 in the 1st embodiment, the definitions of these parameters are the same as those stated in the Example 1 in the 1st embodiment, so an explanation will not be provided again.

| Table 4, Example 2 in 1st embodiment | | |
|---|---|---|
| | Before heating | After heating |
| L* | 0.87 | 1.38 |
| a* | -0.23 | 0.20 |
| b* | -2.00 | -0.35 |

Table 5 shows the thickness of each layer in the nanostructure matching layer 142 of the Example 3 in the 1st embodiment. Specifically, the material of each layer in the nanostructure matching layer 142 of the Example 3 in the 1st embodiment and of the Example 1 in the 1st embodiment are the same or similar, the differences are the thickness of each of the at least two optically rarer medium layers and the thickness of the at least one optically denser medium layer.

| Table 5, Example 3 in 1st embodiment | |
|---|---|
| | Thickness |
| Optically rarer medium layer | 21 nm |
| Optically denser medium layer | 11 nm |
| Optically rarer medium layer | 64 nm |
| Optically denser medium layer | 11 nm |
| Optically rarer medium layer | 83 nm |
| Optically denser medium layer | 6 nm |
| Optically rarer medium layer | 18 nm |

Furthermore, Table 6 shows values of CIELAB color space of the Example 3 in the 1st embodiment, the definitions of these parameters are the same as those stated in the Example 1 in the 1st embodiment, so an explanation will not be provided again.

| Table 6, Example 3 in 1st embodiment | | |
|---|---|---|
| | Before heating | After heating |
| L* | 0.76 | 2.48 |
| a* | 0.08 | 0.02 |
| b* | -0.22 | 2.42 |

Table 7 shows the thickness of each layer in the nanostructure matching layer 142 of the Example 4 in the 1st embodiment. Specifically, the material of each layer in the nanostructure matching layer 142 of the Example 4 in the 1st embodiment and of the Example 1 in the 1st embodiment are the same or similar, the differences are the thickness of each of the at least two optically rarer medium layers and the thickness of the at least one optically denser medium layer.

| Table 7, Example 4 in 1st embodiment | |
|---|---|
| | Thickness |
| Optically rarer medium layer | 13 nm |
| Optically denser medium layer | 7 nm |
| Optically rarer medium layer | 49 nm |
| Optically denser medium layer | 21 nm |
| Optically rarer medium layer | 59 nm |
| Optically denser medium layer | 15 nm |
| Optically rarer medium layer | 40 nm |

(continued)

| Table 7, Example 4 in 1st embodiment | |
|---|---|
| | Thickness |
| Optically denser medium layer | 5 nm |
| Optically rarer medium layer | 16 nm |

Furthermore, Table 8 shows values of CIELAB color space of the Example 4 in the 1st embodiment, the definitions of these parameters are the same as those stated in the Example 1 in the 1st embodiment, so an explanation will not be provided again.

| Table 8, Example 4 in 1st embodiment | | |
|---|---|---|
| | Before heating | After heating |
| $L^*$ | 0.94 | 2.52 |
| $a^*$ | -0.61 | -0.10 |
| $b^*$ | 0.32 | 2.14 |

Moreover, the component structures and arrangements according to the Example 2 in the 1st embodiment, the Example 3 in the 1st embodiment, and the Example 4 in the 1st embodiment are the same as the component structures and arrangements according to the Example 1 in the 1st embodiment, and will not be described again herein.

<2nd embodiment>

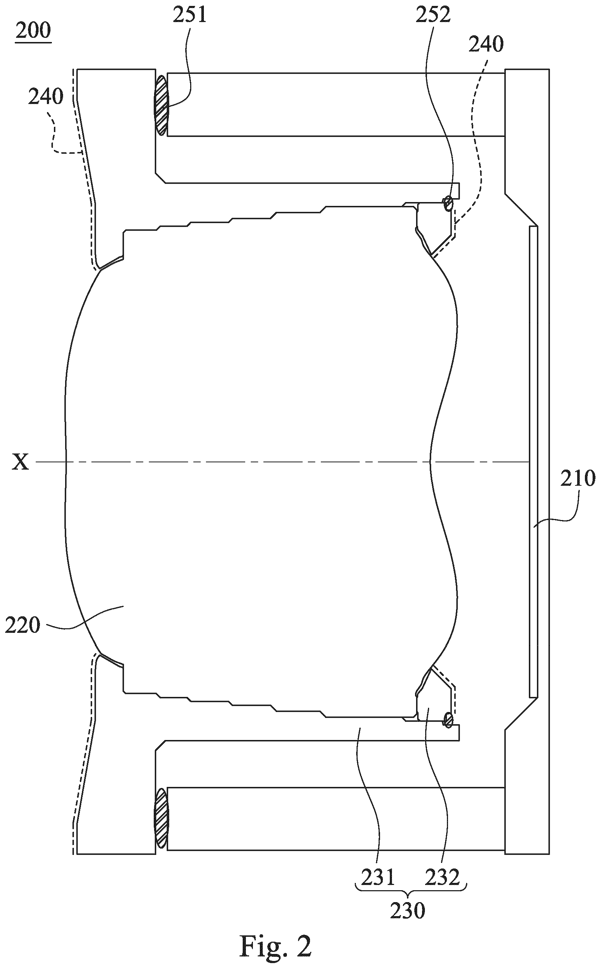

Fig. 2 is a schematic view of a camera module 200 according to the 2nd embodiment of the present disclosure. In Fig. 2, the camera module 200 includes an imaging lens assembly module (not shown) and an image sensor 210, wherein the image sensor 210 is disposed on an image surface (not shown) of the imaging lens assembly module. The imaging lens assembly module has an optical axis X, and the imaging lens assembly module includes an optical element 220, an assembling element 230 and a plurality of low-reflection thin films 240, wherein the optical axis X passes through the optical element 220, and the assembling element 230 is configured to be assembled with the optical element 220.

Furthermore, the assembling element 230 can include a first assembling component 231 and a second assembling component 232, wherein the first assembling component 231 surrounds and positions the optical element 220, the second assembling component 232 can be a retainer and located on an image side of the optical element 220. The imaging lens assembly module can further include two adhering components 251, 252, wherein the adhering component 251 can be disposed on the first assembling component 231 to assembly the imaging lens assembly module, and the adhering component 251 can be not directly contacted with the low-reflection thin films 240. The adhering component 252 is configured to position the second assembling component 232 in the first assembling component 231 and on the image side of the optical element 220. Further, the low-reflection thin films 240 are disposed on a part of surfaces of the assembling element 230, which are a surface of the first assembling component 231 facing towards an object side and a surface of the second assembling component 232 facing towards an image side.

The component structures and arrangements according to the 2nd embodiment are the same as the component structures and arrangements according to the 1st embodiment, and will not be described again herein.

<3rd embodiment>

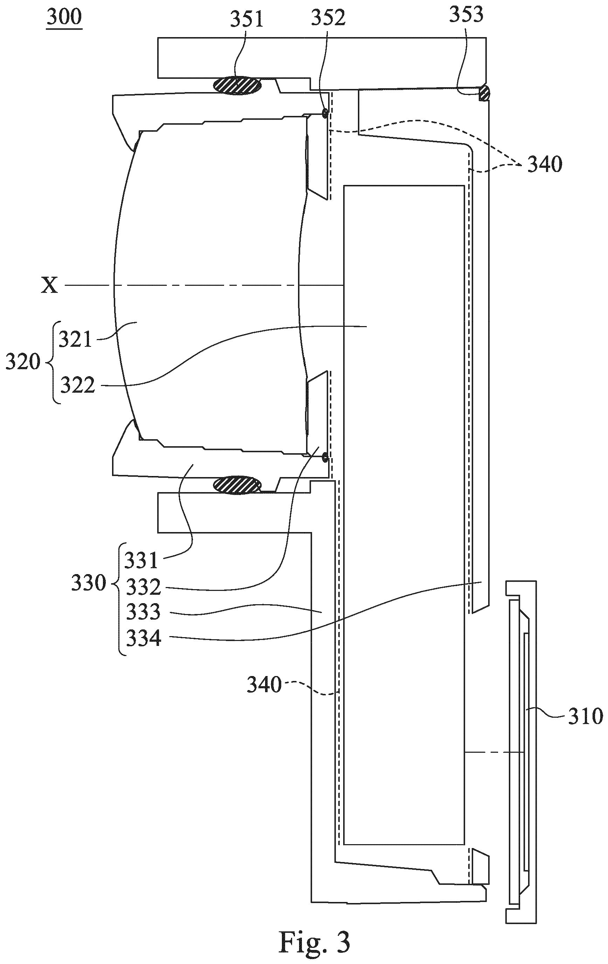

Fig. 3 is a schematic view of a camera module 300 according to the 3rd embodiment of the present disclosure. In Fig. 3, the camera module 300 includes an imaging lens assembly module (not shown) and an image sensor 310, wherein the image sensor 310 is disposed on an image surface (not shown) of the imaging lens assembly module. The imaging lens assembly module has an optical axis X, and the imaging lens assembly module includes an optical element 320, an assembling element 330 and a plurality of low-reflection thin films 340, wherein the optical axis X passes through the optical element 320, and the assembling element 330 is configured to be assembled with the optical element 320.

Furthermore, the optical element 320 can include a first optical component 321 and a second optical component 322. The assembling element 330 can include a first assembling component 331, a second assembling component 332, a third assembling component 333, and a fourth assembling component 334, wherein the first assembling component 331 surrounds the first optical component 321, the second assembling component 332 can be a retainer and located on an image side of the first optical component 321, the third assembling component 333 is configured to position the first optical component 321 and the second optical component 322, and the fourth assembling component 334 is located on an image side of the second optical component 322. The imaging lens assembly module can further include three adhering components 351, 352, 353 wherein the adhering component 351 can be disposed on the first assembling component 331, the adhering component 352 is configured to position the second assembling component 332 in the first assembling component 331 and on the image side of the first optical component 321, and the adhering component 353 can be disposed on the fourth assembling component 334 so as to assembly the imaging lens assembly module. Moreover, the adhering components 351, 353 can be not directly contacted with the low-reflection thin films 340. Further, the low-reflection thin films 340 are disposed on a part of surfaces of the assembling element 330, which are a surface of the first assembling component 331 facing towards an image side, a surface of the second assembling component 332 facing towards the image side, a surface of the third assembling component 333 facing towards the image side, and a surface of the fourth assembling component 334 facing towards an object side.

The component structures and arrangements according to the 3rd embodiment are the same as the component structures and arrangements according to the 1st embodiment, and will not be described again herein.

<4th embodiment>

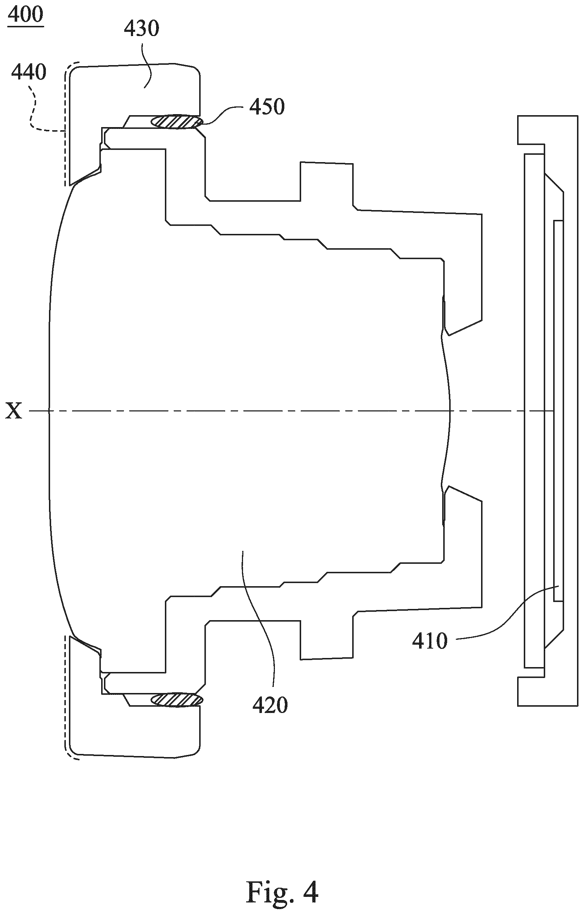

Fig. 4 is a schematic view of a camera module 400 according to the 4th embodiment of the present disclosure. In Fig. 4, the camera module 400 includes an imaging lens assembly module (not shown) and an image sensor 410, wherein the image sensor 410 is disposed on an image surface (not shown) of the imaging lens assembly module. The imaging lens assembly module has an optical axis X, and the imaging lens assembly module includes an optical element 420, an assembling element 430 and a low-reflection thin film 440, wherein the optical axis X passes through the optical element 420, and the assembling element 430 is configured to be assembled with the optical element 420. Furthermore, the imaging lens assembly module can further include an adhering component 450, wherein the adhering component 450 can be disposed on the assembling element 430 to assembly the imaging lens assembly module, and the adhering component 450 can be not directly contacted with the low-reflection thin film 440. Further, the low-reflection thin film 440 is disposed on a part of surfaces of the assembling element 430, which is a surface of the assembling element 430 facing towards an object side.

The component structures and arrangements according to the 4th embodiment are the same as the component structures and arrangements according to the 1st embodiment, and will not be described again herein.

<5th embodiment>

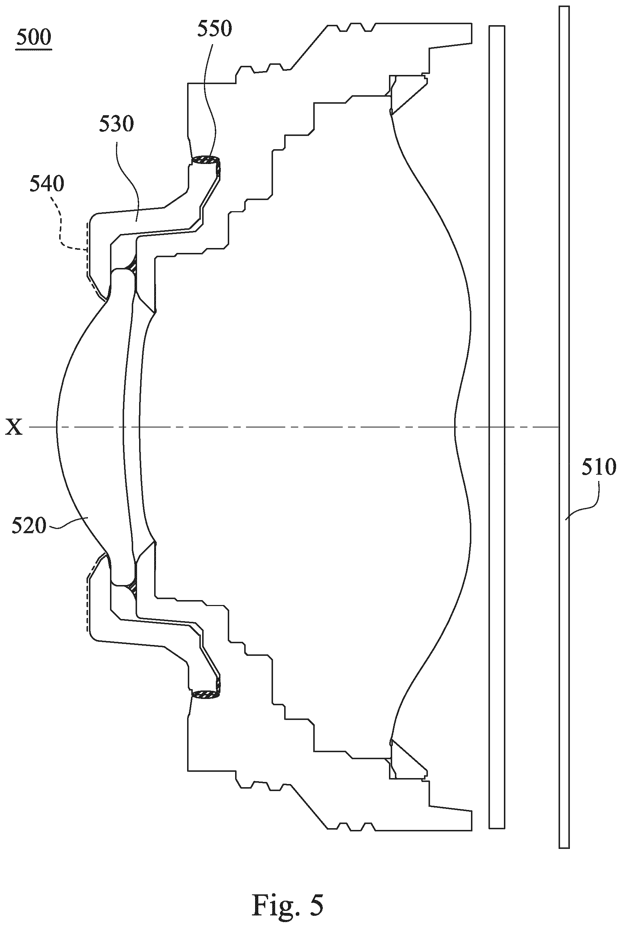

Fig. 5 is a schematic view of a camera module 500 according to the 5th embodiment of the present disclosure. In Fig. 5, the camera module 500 includes an imaging lens assembly module (not shown) and an image sensor 510, wherein the image sensor 510 is disposed on an image surface (not shown) of the imaging lens assembly module. The imaging lens assembly module has an optical axis X, and the imaging lens assembly module includes an optical element 520, an assembling element 530 and a low-reflection thin film 540, wherein the optical axis X passes through the optical element 520, and the assembling element 530 is configured to be assembled with the optical element 520. Furthermore, the imaging lens assembly module can further include an adhering component 550, wherein the adhering component 550 can be disposed on the assembling element 530 to assembly the imaging lens assembly module, and the adhering component 550 can be not directly contacted with the low-reflection thin film 540. Further, the low-reflection thin film 540 is disposed on a part of surfaces of the assembling element 530, which is a surface of the assembling element 530 facing towards an object side.

The component structures and arrangements according to the 5th embodiment are the same as the component structures and arrangements according to the 1st embodiment, and will not be described again herein.

<6th embodiment>

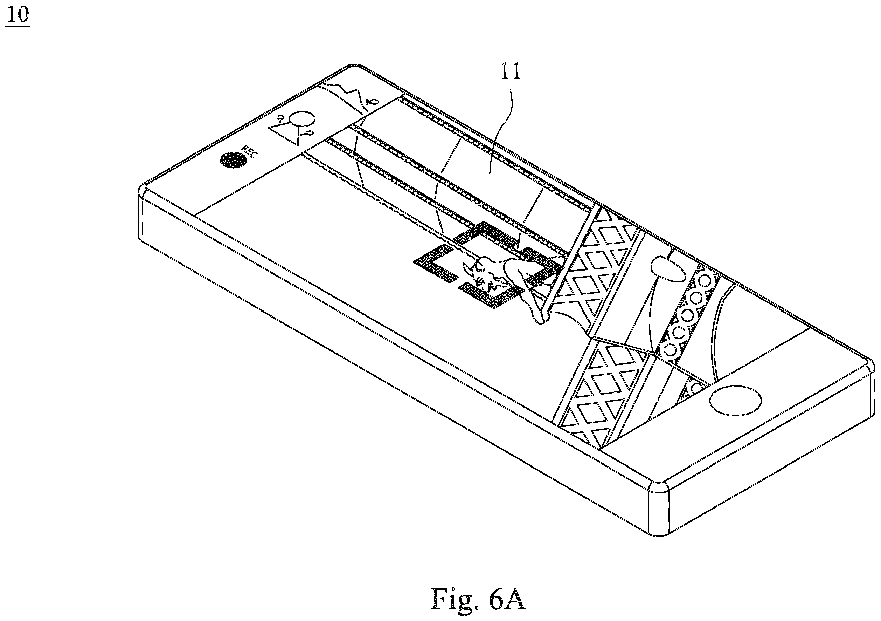

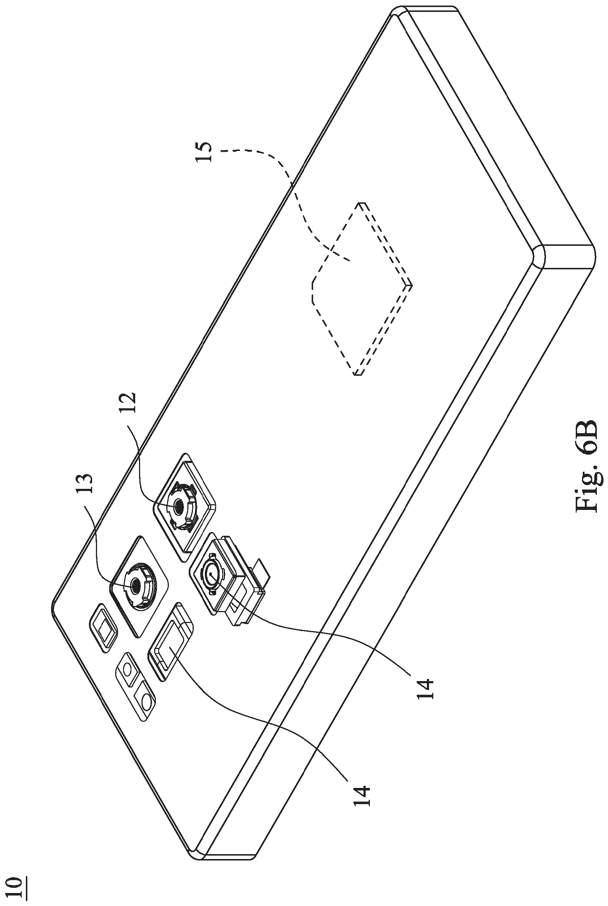

Fig. 6A is a schematic view of an electronic device 10 according to the 6th embodiment of the present disclosure, and Fig. 6B is another schematic view of the electronic device 10 according to the 6th embodiment in Fig. 6A. In Fig. 6A and Fig. 6B, the electronic device 10 is a smart phone, and the electronic device 10 includes camera modules and a user interface 11, wherein the camera module includes an imaging lens assembly module (not shown) and an image sensor (not shown), wherein the image sensor is disposed on an image surface (not shown) of the imaging lens assembly module, and the imaging lens assembly module includes an optical element, an assembling element and a low-reflection thin film. Moreover, the camera modules are an ultra-wide angle camera module 12, a high resolution camera module 13 and a telephoto camera module 14, and the user interface 11 is a touch screen, but the present disclosure is not limited thereto. Particularly, the camera module can be the camera module according to any one of the aforementioned 1st embodiment to the 5th embodiment, but the present disclosure is not limited thereto.

A user enters a shooting mode via the user interface 11, wherein the user interface 11 is configured to display an image, and the shooting angle can be manually adjusted to switch to different camera modules. At this moment, the imaging light is gathered on an image sensor, and an electronic signal about an image is output to an image signal processor (ISP) 15.

In Fig. 6B, in order to meet a camera specification of the electronic device 10, the electronic device 10 can further include an optical anti-shake mechanism (not shown). Furthermore, the electronic device 10 can further include at least one focusing assisting module (not shown) and at least one sensing element (not shown). The focusing assisting module can be a flash module (not shown) for compensating a color temperature, an infrared distance measurement component, a laser focus module and so on. The sensing element can have functions for sensing physical momentum and kinetic energy, such as an accelerator, a gyroscope, a Hall Effect element, to sense shaking or jitters applied by hands of the users or external environments. Accordingly, the camera module of the electronic device 10 equipped with an auto-focusing mechanism and the optical anti-shake mechanism can be enhanced to achieve the superior image quality. Furthermore, the electronic device 10 according to the present disclosure can have a capturing function with multiple modes, such as taking optimized selfies, high dynamic range (HDR) under a low light condition, 4K resolution recording and so on. Furthermore, the user can visually see a captured image of the camera via the user interface 11 and manually operate the view finding range on the user interface 11 to achieve the autofocus function of what you see is what you get.

Moreover, the camera module, the optical anti-shake mechanism, the sensing element and the focusing assisting module can be disposed on a flexible printed circuit board (FPC) (not shown) and electrically connected to the image signal processor 15 and other related components, via a connector (not shown) to perform a capturing process. Since the current electronic devices, such as smart phones, have a tendency of being compact, the way of firstly disposing the camera module and related components on the flexible printed circuit board and secondly integrating the circuit thereof into the main board of the electronic device via the connector can satisfy the requirements of the mechanical design and the circuit layout of the limited space inside the electronic device, and obtain more margins. The autofocus function of the camera module can also be controlled more flexibly via the touch screen of the electronic device. According to the 6th embodiment, the electronic device 10 can include a plurality of sensing elements and a plurality of focusing assisting modules. The sensing elements and the focusing assisting modules are disposed on the flexible printed circuit board and at least one other flexible printed circuit board (not shown) and electrically connected to the image signal processor 15 and other related components, via corresponding connectors to perform the capturing process. In other embodiments (not shown), the sensing elements and the focusing assisting modules can also be disposed on the main board of the electronic device or carrier boards of other types according to requirements of the mechanical design and the circuit layout.

Furthermore, the electronic device 10 can further include, but not be limited to, a display, a control unit, a storage unit, a random access memory (RAM), a read-only memory (ROM), or the combination thereof.

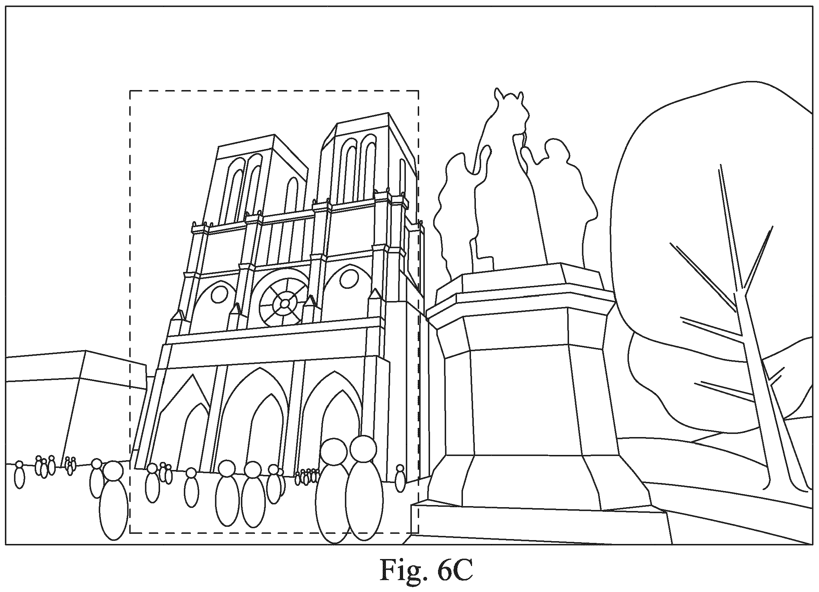

Fig. 6C is a schematic view of an image captured via the electronic device 10 according to the 6th embodiment in Fig. 6A. In Fig. 6C, the larger range of the image can be captured via the ultra-wide angle camera module 12, and the ultra-wide angle camera module 12 has the function of accommodating wider range of the scene.

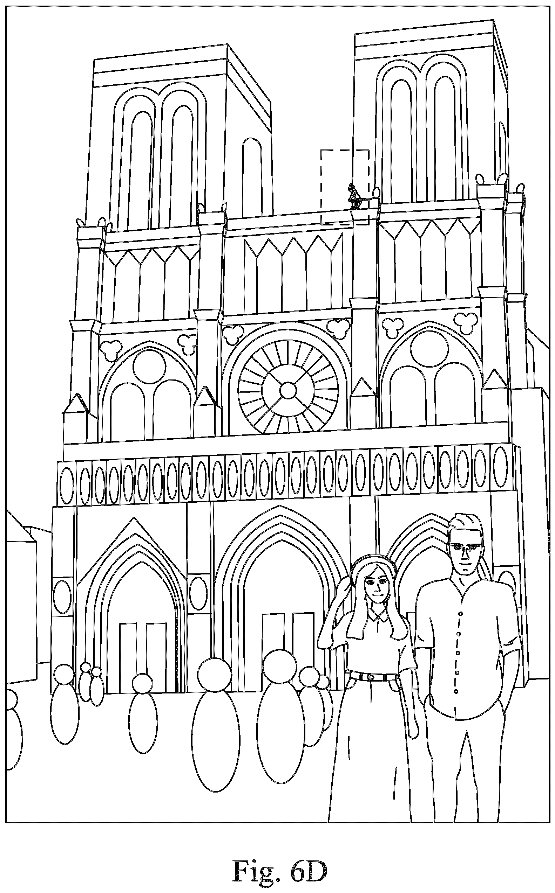

Fig. 6D is a schematic view of another image captured via the electronic device 10 according to the 6th embodiment in Fig. 6A. In Fig. 6D, the image of the certain range with the high resolution can be captured via the high resolution camera module 13, and the high resolution camera module 13 has the function of the high resolution and the low deformation.

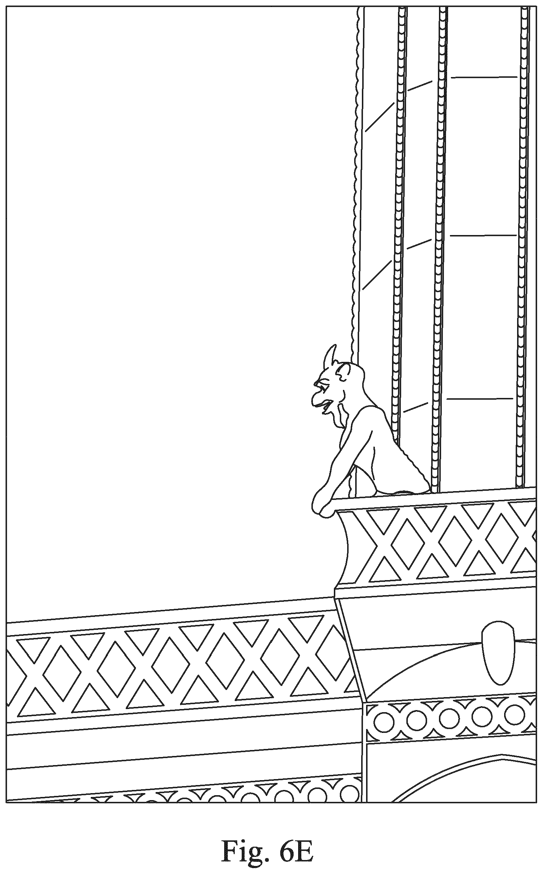

Fig. 6E is a schematic view of another image captured via the electronic device 10 according to the 6th embodiment in Fig. 6A. In Fig. 6E, the telephoto camera module 14 has the enlarging function of the high magnification, and the distant image can be captured and enlarged with high magnification via the telephoto camera module 14.

In Fig. 6C to Fig. 6E, the zooming function can be obtained via the electronic device 10, when the scene is captured via the camera module with different focal lengths cooperated with the function of image processing.

<7th embodiment>

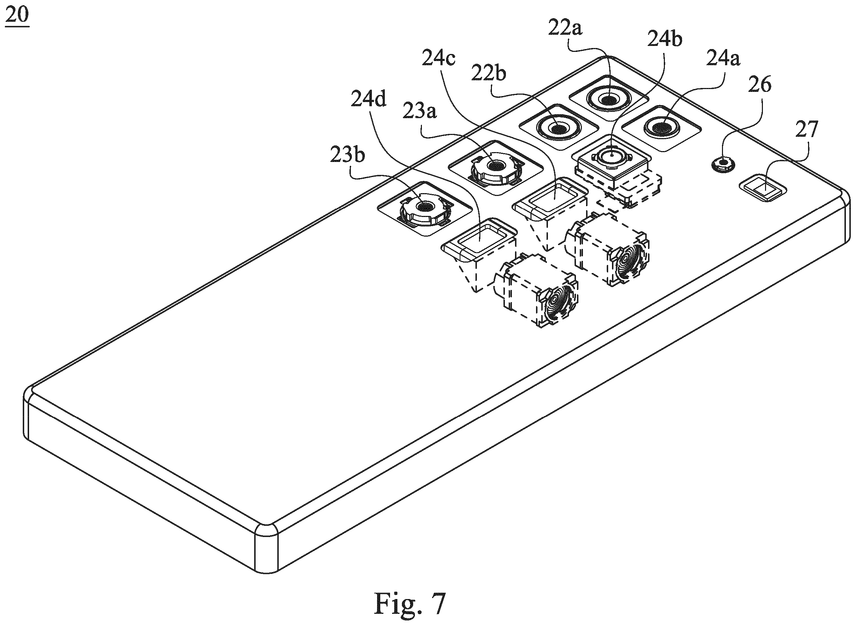

Fig. 7 is a schematic view of an electronic device 20 according to the 7th embodiment of the present disclosure. In Fig. 7, the electronic device 20 is a smart phone, and the electronic device 20 includes the camera module, wherein the camera module includes an imaging lens assembly module and an image sensor, the image sensor is disposed on an image surface of the imaging lens assembly module, and the imaging lens assembly module includes an optical element, an assembling element and a low-reflection thin film. Moreover, the camera modules can be ultra-wide angle camera modules 22a, 22b, wide angle camera modules 23a, 23b, telephoto camera modules 24a, 24b, 24c, 24d and a Time-Of-Flight (TOF) module 26. The TOF module 26 can be another type of the camera module, and the disposition is not limited thereto. Particularly, the camera module can be the camera module according to any one of the aforementioned 1st embodiment to the 5th embodiment, but the present disclosure is not limited thereto.

Furthermore, the telephoto camera modules 24c, 24d are configured to fold the light, but the present disclosure is not limited thereto.

To meet a specification of the camera module of the electronic device 20, the electronic device 20 can further include an optical anti-shake mechanism

(not shown). Furthermore, the electronic device 20 can further include at least one focusing assisting module (not shown) and at least one sensing element (not shown). The focusing assisting module can be a flash module 27 for compensating a color temperature, an infrared distance measurement component, a laser focus module and so on. The sensing element can have functions for sensing physical momentum and kinetic energy, such as an accelerator, a gyroscope, a Hall Effect element, to sense shaking or jitters applied by hands of the users or external environments. Accordingly, the camera module of the electronic device 20 equipped with an auto-focusing mechanism and the optical anti-shake mechanism can be enhanced to achieve the superior image quality. Furthermore, the electronic device 20 according to the present disclosure can have a capturing function with multiple modes, such as taking optimized selfies, High Dynamic Range (HDR) under a low light condition, 4K Resolution recording and so on.

Moreover, all of other component structures and dispositions according to the 7th embodiment are the same as the component structures and the arrangements according to the 6th embodiment, and will not be described again herein.

<8th embodiment>

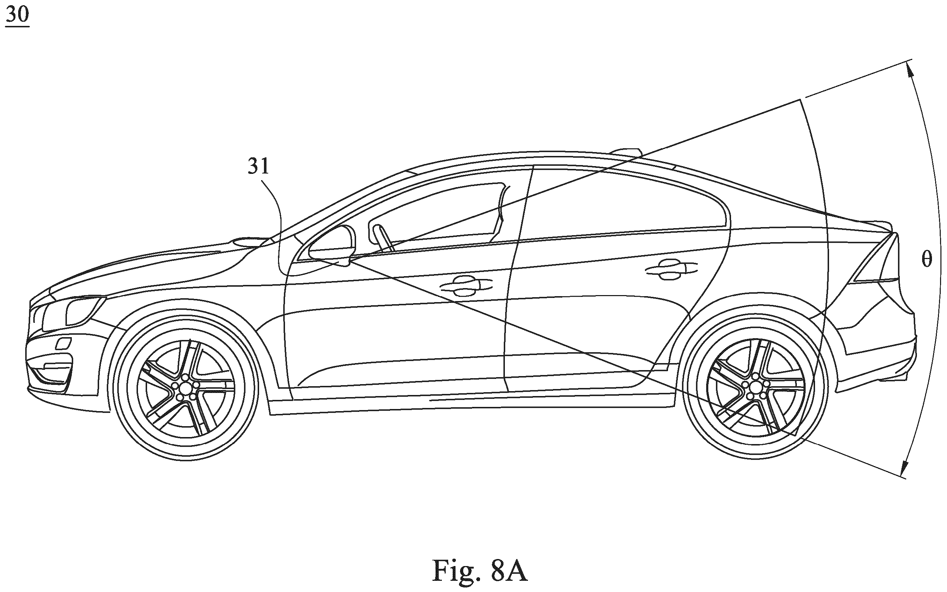

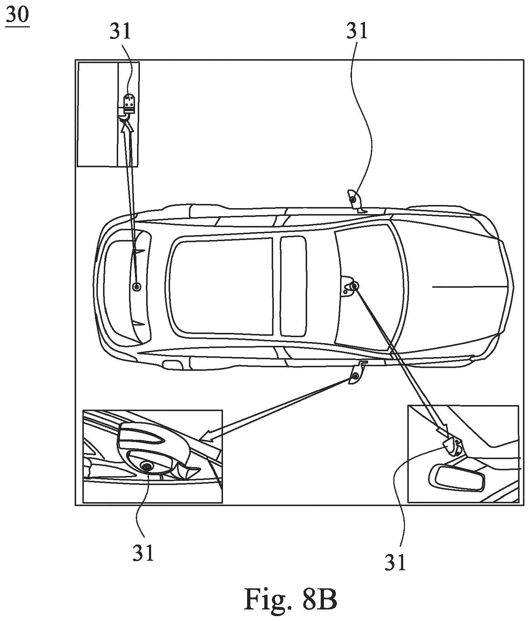

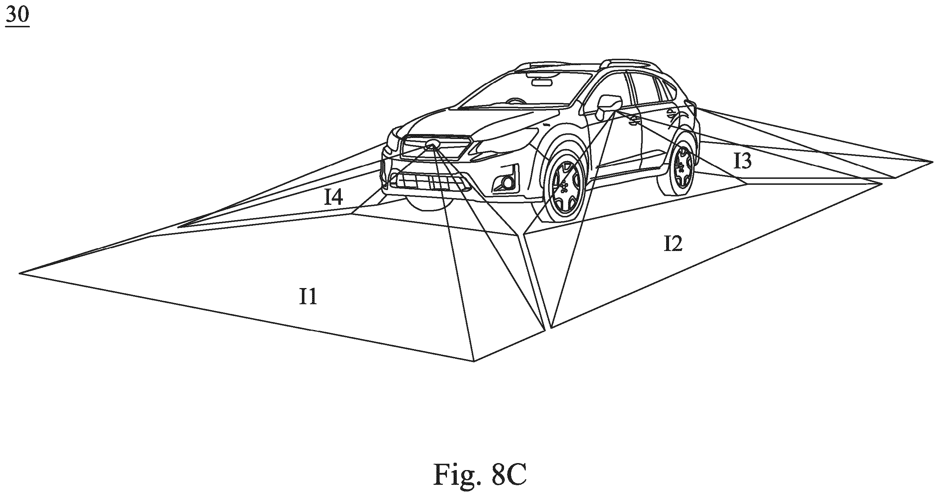

Fig. 8A is a schematic view of a camera module 31 applied to a vehicle 30 according to the 8th embodiment of the present disclosure, Fig. 8B is a schematic view of a camera module 31 configured on the vehicle 30 according to the 8th embodiment in Fig. 8A, and Fig. 8C is another schematic view of a camera module (not shown) configured on the vehicle 30 according to the 8th embodiment in Fig. 8A. In Fig. 8A to Fig. 8C, the camera module 31 applied to the vehicle 30, wherein the camera module 31 includes an imaging lens assembly module and an image sensor, the image sensor is disposed on an image surface of the imaging lens assembly module, and the imaging lens assembly module includes an optical element, an assembling element and a low-reflection thin film. In the 8th embodiment, a number of camera modules 31 is six, the camera modules 31 are vehicle camera modules, and the camera module can be the camera module according to any one of the aforementioned 1st embodiment to the 5th embodiment, but the present disclosure is not limited thereto.

In Fig. 8A and Fig. 8B, two of the camera modules 31 are disposed under a left rearview mirror and a right rearview mirror, respectively, which can for capturing the image information with a visual angle θ. Particularly, the visual angle θ can satisfy the following condition: 40 degrees < θ < 90 degrees. Therefore, the image information within a left lane and a right lane can be captured.

In Fig. 8B, another two of the camera modules 31 can be disposed in an inner space of the vehicle 30. Particularly, the aforementioned two of the camera modules 31 on a location close to the rearview mirror inside the vehicle 30 and a location close to the rear car window, respectively. Moreover, the camera modules 31 can be further disposed on the rearview mirrors on the left side and the right side except the mirror surface, respectively, but the present disclosure is not limited thereto.

Furthermore, another two of the camera modules 31 can be disposed on a front end of the vehicle 30 and a rear end of the vehicle 30, respectively. By disposing the camera modules 31 on the front end and the rear end of the vehicle 30 and under the rearview mirror on the left side of the vehicle 30 and the right side of the vehicle 30, it is favorable for the drivers obtaining the external space information in addition to the driving seat, such as the external space informations I1, I2, I3, I4, but the present disclosure is not limited thereto. Therefore, more visual angles can be provided to reduce the blind spot, so that the driving safety can be improved. Further, the traffic information outside of the vehicle 30 can be recognized by disposing the camera modules 31 on the periphery of the vehicle 30, so that the function of the automatic driving assistance can be achieved.

**Claims**

**1.** An imaging lens assembly module, having an optical axis (X), **characterized in** comprising:

an optical element (120), the optical axis (X) passing through the optical element (120);
an assembling element (130) configured to be assembled with the optical element (120); and
a low-reflection thin film (140) disposed on a part of surfaces of the assembling element (130), comprising:

a nanostructure layer (141) comprising a plurality of ridged protrusions (143), wherein the ridged protrusions(143) are arranged irregularly; and
a nanostructure matching layer (142) disposed between the assembling element (130) and the nanostructure layer (141), comprising:

at least two optically rarer medium layers; and

at least one optically denser medium layer stacked between the at least two optically rarer medium layers;

wherein a thickness of each of the at least two optically rarer medium layers is larger than 40 nm and less than 100 nm, a thickness of the at least one optically denser medium layer is larger than 1 nm and less than 33 nm, and a height of each of the ridged protrusions (143) is larger than 80 nm and less than 300 nm.

2. The imaging lens assembly module of claim 1, wherein the thickness of each of the at least two optically rarer medium layers is larger than 45 nm and less than 95 nm.

3. The imaging lens assembly module of any of claims 1-2, wherein the thickness of each of the at least two optically rarer medium layers is larger than 48 nm and less than 85 nm.

4. The imaging lens assembly module of any of claims 1-3, wherein the thickness of the at least one optically denser medium layer is larger than 3 nm and less than 28 nm.

5. The imaging lens assembly module of any of claims 1-4, wherein the thickness of the at least one optically denser medium layer is larger than 3 nm and less than 25 nm.

6. The imaging lens assembly module of any of claims 1-5, wherein the optical element (120) is assembled on the assembling element (130), and the optical element (120) is directly contacted with the assembling element (130).

7. The imaging lens assembly module of any of claims 1-6, wherein the assembling element (130) is made of an opaque plastic material to absorb a light incident into the assembling element (130).

8. The imaging lens assembly module of any of claims 1-7, wherein the at least two optically rarer medium layers comprise a silicon oxide material.

9. The imaging lens assembly module of any of claims 1-8, wherein the at least one optically denser medium layer comprises a titanium oxide material.

10. The imaging lens assembly module of any of claims 1-9, wherein the ridged protrusions (143) comprise an aluminum oxide material.

11. The imaging lens assembly module of any of claims 1-10, further comprising:

an adhering component (151, 152) disposed on the assembling element (130) to assembly the imaging lens assembly module, wherein the adhering component (151, 152) is not directly contacted with the low-reflection thin film (140).

12. The imaging lens assembly module of any of claims 1-11, wherein an optical reflectance of the low-reflection thin film (140) in a visible light wavelength range is R, and the following condition is satisfied:

$$0.0\% \leq R \leq 0.6\%.$$

13. The imaging lens assembly module of any of claims 1-12, wherein the optical reflectance of the low-reflection thin film (140) in the visible light wavelength range is R, and the following condition is satisfied:

$$0.0\% \leq R \leq 0.4\%.$$

14. The imaging lens assembly module of any of claims 1-13, wherein the optical reflectance of the low-reflection thin film (140) in the visible light wavelength range is R, and the following condition is satisfied:

$$0.0\% \leq R \leq 0.3\%.$$

15. The imaging lens assembly module of any of claims 1-14, wherein the assembling element (130) is disposed on a surface of the low-reflection thin film (140);

wherein a value of CIELAB color space of the surface is L*a*b*, L* is a lightness, a* is a degree of red and green, b* is a degree of yellow and blue, and the following conditions are satisfied:

$$0.2 < L^* < 2.7;$$

$$-1.5 < a^* < 2.0;$$

and

$$-4.0 < b^* < 2.5.$$

16. A camera module (100), **characterized in** comprising:

the imaging lens assembly module of any of claims 1-15; and
an image sensor (110) disposed on an image surface of the imaging lens assembly module.

17. An electronic device (10), **characterized in** comprising:
the camera module (100) of claim 16.

Fig. 1A

EP 4 575 593 A1

Fig. 1B

Fig. 1C

Fig. 2

300

351    352    353

340

X

321
320
322

331
332
330
333
334

340

310

Fig. 3

400

440

430

450

X

420

410

Fig. 4

Fig. 5

Fig. 6A

Fig. 6B

EP 4 575 593 A1

Fig. 6C

Fig. 6D

Fig. 6E

Fig. 7

Fig. 8A

EP 4 575 593 A1

30

31

31

31

31

Fig. 8B

Fig. 8C

Europäisches
Patentamt

European
Patent Office

Office européen
des brevets

# EUROPEAN SEARCH REPORT

**Application Number**

EP 24 22 1038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/011224 A1 (TAKAHASHI HIROKI [JP]) 11 January 2018 (2018-01-11) * page 7, paragraph 69 - paragraph 70; example 5 * | 1-6,8-17 | INV. G02B1/115 G02B1/118 G02B5/02 |
| | ----- | | |
| A | US 2021/165136 A1 (TSAI WEN-YU [TW] ET AL) 3 June 2021 (2021-06-03) * paragraph [0063] - paragraph [0067]; figure 2A * | 1-17 | |
| | ----- | | |
| A | US 2023/305200 A1 (TSAI WEN-YU [TW] ET AL) 28 September 2023 (2023-09-28) * page 6; table 1A * | 1-17 | |
| | ----- | | |
| A | US 2022/407993 A1 (TSAI WEN-YU [TW] ET AL) 22 December 2022 (2022-12-22) * claim 1 * | 1-17 | |
| | ----- | | |
| A | US 2015/177419 A1 (CHU KUO-CHIANG [TW] ET AL) 25 June 2015 (2015-06-25) * claim 1 * | 1-17 | TECHNICAL FIELDS SEARCHED (IPC) |
| | ----- | | G02B |

The present search report has been drawn up for all claims

| Place of search | Date of completion of the search | Examiner |
|---|---|---|
| Munich | 28 March 2025 | Le Masson, Nicolas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 22 1038

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2025

| Patent document cited in search report | Publication date | Patent family member(s) | Publication date |
|---|---|---|---|
| US 2018011224 A1 | 11-01-2018 | CN 107430214 A | 01-12-2017 |
| | | DE 112016001087 T5 | 23-11-2017 |
| | | JP 6255531 B2 | 27-12-2017 |
| | | JP WO2016159290 A1 | 03-08-2017 |
| | | US 2018011224 A1 | 11-01-2018 |
| | | WO 2016159290 A1 | 06-10-2016 |
| US 2021165136 A1 | 03-06-2021 | CN 112882137 A | 01-06-2021 |
| | | CN 212255765 U | 29-12-2020 |
| | | TW 202120985 A | 01-06-2021 |
| | | US 2021165136 A1 | 03-06-2021 |
| | | US 2024077656 A1 | 07-03-2024 |
| | | US 2024077657 A1 | 07-03-2024 |
| US 2023305200 A1 | 28-09-2023 | BR 102023005283 A2 | 10-10-2023 |
| | | CN 116804775 A | 26-09-2023 |
| | | EP 4249966 A1 | 27-09-2023 |
| | | TW 202338404 A | 01-10-2023 |
| | | US 2023305200 A1 | 28-09-2023 |
| US 2022407993 A1 | 22-12-2022 | CN 115469382 A | 13-12-2022 |
| | | CN 216900993 U | 05-07-2022 |
| | | EP 4102570 A2 | 14-12-2022 |
| | | EP 4428922 A2 | 11-09-2024 |
| | | JP 7490706 B2 | 27-05-2024 |
| | | JP 2022189734 A | 22-12-2022 |
| | | JP 2024120179 A | 04-09-2024 |
| | | KR 20220166725 A | 19-12-2022 |
| | | KR 20250021487 A | 13-02-2025 |
| | | US 2022407993 A1 | 22-12-2022 |
| US 2015177419 A1 | 25-06-2015 | CN 104730675 A | 24-06-2015 |
| | | TW 201525554 A | 01-07-2015 |
| | | US 2015177419 A1 | 25-06-2015 |

EPO FORM P0459

For more details about this annex : see Official Journal of the European Patent Office, No. 12/82